# EUROPÄISCHE PATENTANMELDUNG

(11) **EP 4 647 194 A1**
(43) Veröffentlichungstag der Anmeldung: **12.11.2025**
(21) Anmeldenummer: 25175048.5
(22) Anmeldetag: 08.05.2025
(51) Int. Cl.: B23B 31/28, B23B 31/00, B23B 31/107, B23Q 3/12

(54) **KUPPLUNGSVORRICHTUNG, BEARBEITUNGSMASCHINE UND VERFAHREN ZUM KOPPELN EINES BEARBEITUNGSWERKZEUGS**

(30) Priorität: 10.05.2024 DE 102024113098
(71) Anmelder: HOMAG GmbH, 72296 Schopfloch (DE)
(72) Erfinder: Disseler, Julian, 44803 Bochum (DE); Kettner, Richard, 02796 Kurort Jonsdorf (DE)
(74) Vertreter: Hoffmann Eitle

(57) **Zusammenfassung**

Die Erfindung betrifft eine Kupplungsvorrichtung (10) für ein Bearbeitungswerkzeug (11), insbesondere zum Koppeln eines Bearbeitungswerkzeugs (11) mit einer Bearbeitungsmaschine, umfassend ein antriebsseitiges Kupplungselement (14) und ein abtriebsseitiges Kupplungselement (15), die lösbar miteinander koppelbar sind, und eine Ausrichteinrichtung (22), die wenigstens ein Kraftfeld zum Ausrichten des antriebsseitigen Kupplungselements (14) und/oder des abtriebsseitigen Kupplungselements (15) bildet, sowie eine Bearbeitungsmaschine und ein Verfahren zum Koppeln wenigstens eines Bearbeitungswerkzeugs (11) mit einer Bearbeitungsmaschine.

## Beschreibung

### Technisches Gebiet

Die Erfindung betrifft eine Kupplungsvorrichtung für ein Bearbeitungswerkzeug, insbesondere zum Koppeln eines Bearbeitungswerkzeugs mit einer Bearbeitungsmaschine, eine Bearbeitungsmaschine zur Bearbeitung von Werkstücken sowie ein Verfahren zum Koppeln eines Bearbeitungswerkzeugs mit einer Bearbeitungsmaschine.

### Stand der Technik

Es sind Bearbeitungsmaschinen bekannt, die einen oder mehrere Anschlüsse zum Auswechseln von Bearbeitungswerkzeugen aufweisen. Der Werkzeugwechsel kann dabei ein definiertes Ausrichten des Bearbeitungswerkzeugs oder einer entsprechenden Werkzeugaufnahme erfordern, um das Bearbeitungswerkzeug mit dem korrespondierenden Anschluss zu koppeln. Zumeist erfolgt dies in Form eines manuellen Ausrichtens durch einen Maschinenbediener, was jedoch bei einem häufigen Werkzeugwechsel oder einer Vielzahl Bearbeitungswerkzeugen zu einem hohen Arbeitsaufwand und erhöhten Stillstandzeiten führt. Werkzeugwechselsysteme können den Werkzeugwechsel durch Sensoren oder dergleichen unterstützen, bilden jedoch eine aufwendige Konstruktion und erfordern einen gewissen Wartungsaufwand.

### Darstellung der Erfindung

Der Erfindung liegt die Aufgabe zugrunde, eine Kupplungsvorrichtung bereitzustellen, die einen schnellen Werkzeugwechsel ermöglicht und einen einfachen konstruktiven Aufbau aufweist. Zudem ist es Aufgabe der Erfindung eine Bearbeitungsmaschine bereitzustellen, die einen schnellen Werkzeugwechsel ermöglicht. Zudem ist es Aufgabe der Erfindung ein Verfahren zum Koppeln eines Bearbeitungswerkzeugs mit einer Bearbeitungsmaschine bereitzustellen, durch welches ein schneller und einfacher Werkzeugwechsel erreicht ist.

Eine Kupplungsvorrichtung ist in Anspruch 1 definiert. Eine Bearbeitungsmaschine ist in Anspruch 11 definiert. Ein Verfahren zum Koppeln eines Bearbeitungswerkzeugs ist in Anspruch 12 definiert. Unteransprüche beziehen sich auf bestimmte Ausführungsformen.

Die Aufgabe wird erfindungsgemäß durch eine Kupplungsvorrichtung für ein Bearbeitungswerkzeug, insbesondere zum Koppeln eines Bearbeitungswerkzeugs mit einer Bearbeitungsmaschine, gelöst, die ein antriebsseitiges Kupplungselement und ein abtriebsseitiges Kupplungselement umfasst, die lösbar miteinander koppelbar sind, sowie eine Ausrichteinrichtung, die wenigstens ein Kraftfeld zum Ausrichten des antriebsseitigen Kupplungselements und/oder des abtriebsseitigen Kupplungselements bildet.

Eine solche Kupplungsvorrichtung kann zum Beispiel einen Anschluss oder eine Schnittstelle zum Koppeln verschiedenartiger Bearbeitungswerkzeuge oder dergleichen mit einer Bearbeitungsmaschine bilden. Durch die Kupplungsvorrichtung kann beispielsweise eine Werkzeugwechselvorrichtung für einen einfachen und schnellen Werkzeugwechsel an einer Bearbeitungsmaschine ausgebildet sein, ein so genanntes Schnellwechselsystem. Insbesondere ist die Kupplungsvorrichtung ausgebildet, dass verschiedenartige Bearbeitungswerkzeuge, bevorzugt verschiedene Bohrwerkzeuge, mit der Bearbeitungsmaschine koppelbar sind. Alternativ oder ergänzend kann die Kupplungsvorrichtung ebenso ausgebildet sein, dass verschiedene Fräswerkzeuge, Sägewerkzeuge und/oder Hilfsmittel mit der Bearbeitungsmaschine koppelbar sind.

Durch das wenigstens eine Kraftfeld ist insbesondere eine Anziehungskraft und/oder Abstoßungskraft erzeugt oder erzeugbar, die zum Ausrichten des antriebsseitigen Kupplungselements und/oder des abtriebsseitigen Kupplungselements auf das antriebsseitige Kupplungselement und/oder das abtriebsseitige Kupplungselement wirkt. Insbesondere wirkt die Anziehungskraft und/oder Abstoßungskraft auf das antriebsseitige Kupplungselement und/oder das abtriebsseitige Kupplungselement, wenn dieses in das wenigstens eine Kraftfeld eingebracht wird. Beispielsweise wenn die Kupplungselemente durch eine Zustellbewegung zum Koppeln einander angenähert werden. Auf diese Weise kann das antriebsseitige Kupplungselement und/oder das abtriebsseitige Kupplungselement vor dem Koppeln durch das wenigstens eine Kraftfeld in eine definierte Kopplungsposition ausgerichtet werden. Dabei kann das wenigstens eine Kraftfeld entweder als ein permanentes Kraftfeld ausgebildet sein oder beliebig steuerbar sein.

Eine Weiterbildung der Kupplungsvorrichtung kann vorsehen, dass das wenigstens eine Kraftfeld eine rotatorische und/oder translatorische Ausrichtbewegung des antriebsseitigen Kupplungselements und/oder des abtriebsseitigen Kupplungselements bewirkt.

Vorzugsweise kann die Kupplungsvorrichtung ausgebildet sein, das antriebsseitige Kupplungselement und das abtriebsseitige Kupplungselement in einer axialen Richtung miteinander zu koppeln. In einer gekoppelten Konfiguration der Kupplungselemente können diese eine gemeinsame Drehachse aufweisen. Durch die rotatorische Ausrichtbewegung des antriebsseitigen Kupplungselements und/oder des abtriebsseitigen Kupplungselements kann das entsprechende Kupplungselement in einer definierten Winkelposition ausrichtbar sein, in der ein Koppeln der Kupplungselemente ermöglicht ist. Durch die translatorische Ausrichtbewegung des antriebsseitigen Kupplungselements und/oder des abtriebsseitigen Kupplungselements kann zudem eine Ausrichtung bzw. Positionierung des entsprechenden Kupplungselements in einer definierten Ortsposition ermöglicht sein, insbesondere eine Ausrichtung bzw. Positionierung bezüglich der gemeinsamen Drehachse. Ist durch das wenigstens eine Kraftfeld eine Anziehungskraft gebildet, kann die translatorische Ausrichtbewegung auch eine Zustell- oder Koppelbewegung wenigstens eines der Kupplungselemente zum Koppeln der Kupplungselemente umfassen.

In einer bevorzugten Ausgestaltung der Kupplungsvorrichtung können die Kupplungselemente durch die durch das Kraftfeld bewirkte Ausrichtbewegung des antriebsseitigen Kupplungselements und/oder des abtriebsseitigen Kupplungselements in einer definierten Orientierung zueinander ausrichtbar sein.

Auf diese Weise kann das antriebsseitige Kupplungselement und/oder das abtriebsseitige Kupplungselement durch die Ausrichtbewegung aus einer beliebig orientierten Ausgangslage, d.h. einer drehwinkelunabhängigen Orientierung, in eine definierte, orientierte Kopplungslage überführt werden. Durch die definierte Orientierung können das antriebsseitige Kupplungselement und das abtriebsseitige Kupplungselement folglich insbesondere in einer definierten Winkellage und/oder definierten Ortslage zueinander ausgerichtet sein. Indem die Kupplungselemente durch das wenigstens eine Kraftfeld in der definierten Orientierung zueinander ausrichtbar sind, kann eine automatisierbare Kopplung der Kupplungselemente ermöglicht sein. Bei dieser kann insbesondere vorgesehen sein, dass die Kupplungselemente bei einem Annähern vor dem Koppeln durch das wenigstens eine Kraftfeld in der definierten Orientierung zueinander ausgerichtet werden und durch eine anschließende Zustellbewegung miteinander gekoppelt werden.

Bevorzugt kann bei der Kupplungsvorrichtung in einer gekoppelten Konfiguration der Kupplungselemente eine drehmomentschlüssige Verbindung zwischen dem antriebsseitigen Kupplungselement und dem abtriebsseitigen Kupplungselement ausgebildet ist.

Die drehmomentschlüssige Verbindung ist bevorzugt durch eine formschlüssige Verbindung ausgebildet. Eine solche formschlüssige Verbindung kann durch eine entsprechende konstruktive Ausgestaltung der Kupplungselemente und/oder der Ausrichteinrichtung ausgebildet sein, die in der gekoppelten Konfiguration aneinander angreifen und/oder ineinander eingreifen. Durch die formschlüssige Verbindung kann eine optimale Drehmomentübertragung von dem antriebsseitigen Kupplungselement auf das abtriebsseitigen Kupplungselement erfolgen. Alternativ oder ergänzend kann die drehmomentschlüssige Verbindung auch als eine kraftschlüssige Verbindung ausbildbar sein.

Eine besonders bevorzugte Ausgestaltung der Kupplungsvorrichtung kann vorsehen, dass die Ausrichteinrichtung wenigstens ein antriebsseitiges Magnetelement und wenigstens ein abtriebsseitiges Magnetelement aufweist, wobei die Magnetelemente sich anziehende oder sich abstoßende Kraftfelder bilden, welche die Ausrichtbewegung des antriebsseitigen Kupplungselements und/oder des abtriebsseitigen Kupplungselements bewirken.

Insbesondere ist das wenigstens eine antriebsseitige Magnetelement an dem antriebsseitigen Kupplungselement angeordnet und das wenigstens eine abtriebsseitige Magnetelement an dem abtriebsseitigen Kupplungselement angeordnet. Die Magnetelemente können bevorzugt in einer zueinander korrespondierenden Anordnung an den Kupplungselementen angeordnet sein. Beispielsweise können die Magnetelemente an zueinander weisenden Stirnseiten und/oder in einer stirnseitigen Vertiefung der Kupplungselemente angeordnet sein. Bei den Magnetelementen kann es sich sowohl um Permanentmagnete handeln als auch um elektromagnetische Aktoren, z.B. Elektromagnete. Durch die Verwendung von elektromagnetischen Aktoren kann beispielsweise das wenigstens eine Kraftfeld bzw. die Anziehungskraft und/oder Abstoßungskraft steuerbar sein.

In einer vorteilhaften Ausgestaltung der Kupplungsvorrichtung kann in der gekoppelten Konfiguration der Kupplungselemente durch das wenigstens eine antriebsseitige Magnetelement und/oder das wenigstens eine abtriebsseitige Magnetelement eine Wirkverbindung zwischen den Kupplungselementen ausgebildet sein, welche die drehmomentschlüssige Verbindung bildet.

Vorzugsweise kann in der gekoppelten Konfiguration der Kupplungselemente durch das wenigstens eine antriebsseitige Magnetelement und/oder das wenigstens eine abtriebsseitige Magnetelement eine kraftschlüssige Verbindung zwischen den Kupplungselementen ausgebildet sein. Hierzu kann das wenigstens eine antriebsseitige Magnetelement und/oder das wenigstens eine abtriebsseitige Magnetelement eine entsprechende geometrische Ausgestaltung aufweisen, um die Wirkverbindung, d.h. die kraftschlüssige Verbindung, zwischen den Kupplungselementen auszubilden. Beispielsweise kann die Wirkverbindung im Wesentlichen durch eine Art Verzahnung zwischen dem wenigstens einen antriebsseitigen Magnetelement und dem wenigstens einen abtriebsseitigen Magnetelement ausgebildet sein, um die kraftschlüssige Verbindung zwischen den Kupplungselementen zu bilden.

In einer vorteilhaften Weiterbildung der Kupplungsvorrichtung kann vorgesehen sein, dass in der gekoppelten Konfiguration der Kupplungselemente das wenigstens eine antriebsseitige Magnetelement und das wenigstens eine abtriebsseitige Magnetelement aneinander anliegen, aneinander angreifen und/oder ineinander eingreifen, um die drehmomentschlüssige Verbindung auszubilden.

Bevorzugt kann das wenigstens eine antriebsseitige Magnetelement ausgebildet sein, in der gekoppelten Konfiguration der Kupplungselemente in eine korrespondierende Vertiefung am abtriebsseitigen Kupplungselement einzugreifen und/oder an einem korrespondierenden Vorsprung am abtriebsseitigen Kupplungselement anzugreifen, um die drehmomentschlüssige Verbindung auszubilden. Das wenigstens eine abtriebsseitige Magnetelement kann bevorzugt ausgebildet sein, in der gekoppelten Konfiguration der Kupplungselemente in eine korrespondierende Vertiefung am antriebsseitigen Kupplungselement einzugreifen und/oder an einem korrespondierenden Vorsprung am antriebsseitigen Kupplungselement anzugreifen, um die drehmomentschlüssige Verbindung auszubilden.

Vorteilhaft können an dem antriebsseitigen Kupplungselement und/oder dem abtriebsseitigen Kupplungselement auch mehrere antriebsseitige und/oder abtriebsseitige Magnetelemente vorgesehen sein, beispielsweise 2, 3 oder mehr antriebsseitige und/oder abtriebsseitige Magnetelemente. Die mehreren antriebsseitigen und/oder abtriebsseitigen Magnetelemente können zueinander beabstandet und/oder einander gegenüberliegend an der Stirnfläche und/oder in der stirnseitigen Vertiefung des jeweiligen Kupplungselements vorgesehen sein. Vorzugsweise können die mehreren antriebsseitigen und/oder abtriebsseitigen Magnetelemente in einer radialen Anordnung um die axiale Drehachse der Kupplungselemente angeordnet sind.

Insbesondere können die antriebsseitigen Magnetelemente und die abtriebsseitigen Magnetelemente in einer axialen Richtung in der Weise angeordnet sein, dass diese in der gekoppelten Konfiguration der Kupplungselemente versetzt zueinander angeordnet sind. Das heißt, dass die antriebsseitigen Magnetelemente und die abtriebsseitigen Magnetelemente in der gekoppelten Konfiguration jeweils abwechselnd nebeneinander liegend und vorzugsweise in der radialen Richtung der Kupplungselemente aneinander anliegend angeordnet sind. Durch diese versetzte Anordnung der Magnetelemente kann die drehmomentschlüssige Verbindung ausgebildet sein, indem die Magnetelemente wechselseitig aneinander anliegen oder sich wechselseitig aneinander abstützen. Durch die versetzte Anordnung der antriebsseitigen Magnetelemente und der abtriebsseitigen Magnetelemente kann in der gekoppelten Konfiguration der Kupplungselemente eine formschlüssige Verzahnung zwischen den Magnetelementen ausgebildet sein. Insbesondere ist bei dieser Konfiguration vorgesehen, dass durch die Magnetelemente jeweils Abstoßungskräfte ausgebildet sind oder ausbildbar sind, sodass die Magnetelemente aufgrund der Abstoßungskräfte durch die rotatorische Ausrichtbewegung jeweils versetzt zueinander angeordnet werden.

Eine Weiterbildung der Kupplungsvorrichtung kann zudem vorsehen, dass zumindest ein Koppelelement vorgesehen ist, durch das in der gekoppelten Konfiguration der Kupplungselemente eine Wirkverbindung zwischen den Kupplungselementen ausgebildet ist, welche die drehmomentschlüssige Verbindung bildet.

Das zumindest eine Koppelelement kann in der gekoppelten Konfiguration der Kupplungselemente an dem abtriebsseitigen Kupplungselement und/oder dem antriebsseitigen Kupplungselement angreifen oder in dieses eingreifen, um die Wirkverbindung zur Bildung der drehmomentschlüssigen Verbindung auszubilden. Das zumindest eine Koppelelement kann als ein beliebig ausgestaltetes Eingriffselement, Angriffselement oder Mitnehmerelement ausgestaltet sein. Bevorzugt ist das zumindest eine Koppelelement an dem abtriebsseitigen Kupplungselement und/oder dem antriebsseitigen Kupplungselement ausgebildet und wirkt mit einer korrespondierend ausgebildeten Koppeleinrichtung am jeweils anderen Kupplungselement zusammen.

In einer Weiterbildung der Kupplungsvorrichtung kann eine Verriegelungseinrichtung vorgesehen sein, die in der gekoppelten Konfiguration die Kupplungselemente lösbar fixiert, bevorzugt lösbar axial fixiert.

Eine solche Verriegelungseinrichtung kann in der gekoppelten Konfiguration der Kupplungselemente ein axiales Lösen der Kupplungselemente verhindern. Die Verriegelungseinrichtung kann beispielsweise durch ein radial gelagertes Fixierelement ausgebildet sein, das in der gekoppelten Konfiguration der Kupplungselemente in eine korrespondierende radiale Vertiefung eingreift. Insbesondere kann die Verriegelungseinrichtung durch wenigstens ein radial federnd gelagertes Kugelelement ausgebildet sein, das in der gekoppelten Konfiguration der Kupplungselemente mit einer radialen Umfangsnut zusammenwirkt.

Bevorzugt kann die Kupplungsvorrichtung ausgebildet sein, dass das abtriebsseitige Kupplungselement eine Werkzeugaufnahme zum Aufnehmen des Bearbeitungswerkzeugs umfasst oder eine Komponente des Bearbeitungswerkzeugs bildet und/oder das antriebsseitige Kupplungselement mit einer Bearbeitungsmaschine koppelbar ist oder eine Komponente der Bearbeitungsmaschine bildet.

Die Werkzeugaufnahme kann beispielsweise mit einem Aufnahmeabschnitt ausgebildet sein, der ein Schaftende des Bearbeitungswerkzeugs aufnimmt und fixiert. Ebenso kann ein Schaftende des Bearbeitungswerkzeugs in der Weise ausgebildet sein, dass dieser das abtriebsseitige Kupplungselement bildet, wodurch das Bearbeitungswerkzeug direkt mit dem antriebsseitigen Kupplungselement koppelbar ist. Das antriebsseitige Kupplungselement kann vorzugsweise durch eine drehmomentschlüssige Verbindung mit der Bearbeitungsmaschine gekoppelt sein oder koppelbar sein. Dadurch kann ein Antriebsmoment eines Antriebs der Bearbeitungsmaschine über die Kupplungsvorrichtung auf das Bearbeitungswerkzeug übertragen werden.

Die Aufgabe wird zudem durch eine Bearbeitungsmaschine zur Bearbeitung von Werkstücken, die bevorzugt aus Holz, Holzwerkstoffen, Kunststoff, Verbundwerkstoff und/oder dergleichen ausgebildet sind, gelöst, umfassend wenigstens eine Schnittstelle zum Koppeln eines Bearbeitungswerkzeugs, wobei die Schnittstelle zumindest eine Kupplungsvorrichtung gemäß einer der zuvor beschriebenen Ausführungsformen aufweist.

Die wenigstens eine Schnittstelle kann entweder in der Weise ausgebildet sein, dass die Kupplungsvorrichtung an der Schnittstelle anbringbar ist, oder, dass diese als die Kupplungsvorrichtung oder zumindest als das antriebsseitige Kupplungselement der Kupplungsvorrichtung ausgebildet ist. Die wenigstens eine Schnittstelle kann demnach einen Anschluss zum Koppeln des Bearbeitungswerkzeugs mit der Bearbeitungsmaschine bilden. Vorzugsweise weist die Bearbeitungsmaschine mehrere solcher Schnittstellen auf, um mit mehreren Kupplungsvorrichtungen mehrere Bearbeitungswerkzeuge mit der Bearbeitungsmaschine zu koppeln. Bei einer Bearbeitungsmaschine mit mehreren solcher Schnittstellen kann es sich insbesondere um einen Mehrspindelbohrer oder Bohrgetriebe handeln, welche eine Vielzahl Bohrwerkzeuge aufweisen, um eine Vielzahl Bohrlöcher, insbesondere Lochreihen oder Lochmuster, gleichzeitig - d.h. mit nur einem Hub der Bohrwerkzeuge - in ein oder mehrere Werkstücke einzubringen.

Die Bearbeitungsmaschine kann als eine stationäre Werkzeugmaschine ausgebildet sein, bei welcher ein zu bearbeitendes Werkstück stationär aufgenommen ist und ein Bearbeitungsaggregat zum Ausführen eines Bearbeitungsvorgangs eine Stellbewegung ausführt. Ebenso kann die Bearbeitungsmaschine als eine Durchlaufmaschine ausgebildet sein, bei welcher das Werkstück durch eine Fördereinrichtung in einer Förderrichtung relativ zu dem Bearbeitungsaggregat bewegt wird, d.h. das Bearbeiten der Werkstücke im Durchlaufverfahren vorgesehen ist. Die Bearbeitungsmaschine kann als eine CNC-gesteuerte Bearbeitungsmaschine oder als ein CNC-gesteuertes Bearbeitungszentrum ausgebildet sein.

Ein Verfahren zum Koppeln wenigstens eines Bearbeitungswerkzeugs mit einer Bearbeitungsmaschine, insbesondere mit einer Kupplungsvorrichtung gemäß einer der zuvor beschriebenen Ausführungsformen, ist in Anspruch 12 definiert und dient zur Realisierung der oben genannten Vorteile. Bei diesem ist besonders bevorzugt vorgesehen, dass wenigstens ein antriebsseitiges Kupplungselement und wenigstens ein abtriebsseitiges Kupplungselement, die lösbar miteinander koppelbar sind, bereitgestellt werden, wenigstens ein Kraftfeld zum Ausrichten des antriebsseitigen Kupplungselements und/oder des abtriebsseitigen Kupplungselements gebildet wird, das antriebsseitige Kupplungselement und/oder das abtriebsseitige Kupplungselement durch eine rotatorische und/oder translatorische Ausrichtbewegung ausgerichtet wird, indem das wenigstens eine Kraftfeld auf das antriebsseitige Kupplungselement und/oder das abtriebsseitige Kupplungselement wirkt, und die zueinander ausgerichteten Kupplungselemente miteinander gekoppelt werden.

Eine bevorzugte Weiterbildung des Verfahrens kann vorsehen, dass mehrere antriebsseitige Kupplungselemente und mehrere abtriebsseitige Kupplungselemente, die jeweils miteinander koppelbar sind, bereitgestellt werden, und die mehreren antriebsseitigen Kupplungselemente und/oder die mehreren abtriebsseitigen Kupplungselemente vor dem Koppeln gemeinsam durch das wenigstens eine Kraftfeld ausgerichtet werden.

Bevorzugt kann dabei vorgesehen sein, dass durch jede Ausrichteinrichtung der jeweiligen Kupplungsvorrichtung wenigstens ein Kraftfeld ausgebildet wird, um das korrespondierende antriebsseitige und/oder abtriebsseitige Kupplungselement zum Koppeln auszurichten. Auf diese Weise können die mehreren antriebsseitigen und/oder mehreren abtriebsseitigen Kupplungselemente in einfacher Weise gleichzeitig ausgerichtet werden, um darauffolgend miteinander gekoppelt werden. Zum Koppeln der mehreren Kupplungselemente können die mehreren antriebsseitigen Kupplungselemente und/oder die mehreren abtriebsseitigen Kupplungselemente in einer Halteeinrichtung aufgenommen sein, die ein gleichzeitiges Ausrichten und Koppeln der Kupplungselemente ermöglicht.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer Ausführungsform einer offenbarungsgemäßen Kupplungsvorrichtung für ein Bearbeitungswerkzeug in einer gekoppelten Konfiguration;
- Fig. 2: eine perspektivische Ansicht der Kupplungsvorrichtung in einer nichtgekoppelten Konfiguration;
- Fig. 3: eine perspektivische Schnittansicht der Kupplungsvorrichtung in der gekoppelten Konfiguration gemäß Fig. 1;
- Fig. 4: eine perspektivische Ansicht einer Haltevorrichtung zum Aufnehmen und Koppeln mehrerer Kupplungselemente;

### Beschreibung von Ausführungsformen

Gleiche Bezugszeichen, die in verschiedenen Figuren aufgeführt sind, benennen identische, einander entsprechende, oder funktionell ähnliche Elemente.

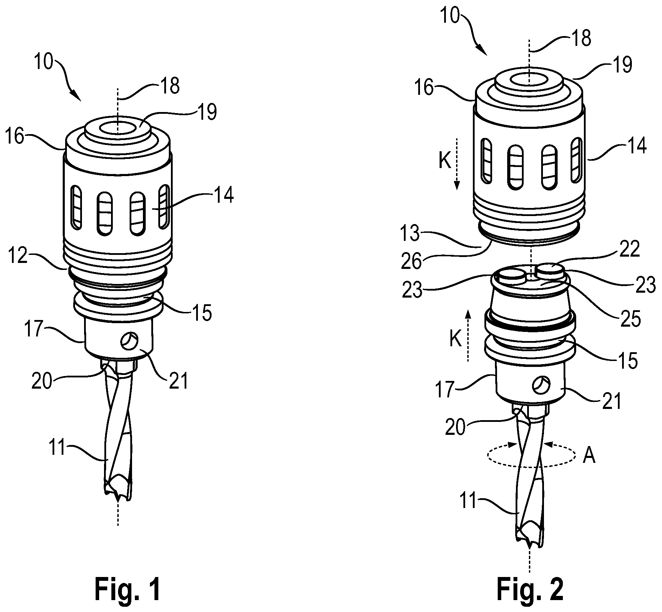

Fig. 1 zeigt eine perspektivische Ansicht einer Ausführungsform einer offenbarungsgemäßen Kupplungsvorrichtung 10 für ein Bearbeitungswerkzeug 11 in einer gekoppelten Konfiguration 12 und Fig. 2 eine perspektivische Ansicht der Kupplungsvorrichtung 10 in einer nichtgekoppelten Konfiguration 13. Eine solche Kupplungsvorrichtung 10 ist insbesondere vorgesehen, um ein Bearbeitungswerkzeug 11, in den Figuren exemplarisch als ein Bohrwerkzeug dargestellt, mit einer nicht näher dargestellten Bearbeitungsmaschine zu koppeln.

Bei der Bearbeitungsmaschine kann es sich sowohl um eine Durchlaufmaschine handeln, bei welcher ein Bearbeiten von Werkstücken im Durchlaufverfahren vorgesehen ist, als auch um eine stationäre Bearbeitungsmaschine, bei welcher das Werkstück für einen Bearbeitungsvorgang stationär aufgenommen ist. Die Bearbeitungsmaschine kann als eine CNC-gesteuerte Bearbeitungsmaschine ausgebildet sein oder ein CNC-gesteuertes Bearbeitungszentrum bilden.

Insbesondere ist die Bearbeitungsmaschine ausgebildet, dass eine Vielzahl der in den Fig. 1 und 2 dargestellten Kupplungsvorrichtungen 10 mit der Bearbeitungsmaschine koppelbar sind. Vorzugsweise handelt es sich bei der Bearbeitungsmaschine um einen so genannter Mehrspindelbohrer oder um ein Bohrgetriebe. Mit einem solchen Mehrspindelbohrer oder Bohrgetriebe sind eine Vielzahl Bohrwerkzeuge koppelbar, um eine Vielzahl Bohrlöcher, insbesondere Lochreihen oder Lochmuster, gleichzeitig - d.h. mit nur einem Hub der Bohrwerkzeuge - in ein oder mehrere Werkstücke einzubringen.

Die Bearbeitungsmaschine ist insbesondere zur Bearbeitung von Werkstücken vorgesehen, die zumindest teilweise aus Holz, einem Holzwerkstoff, Kunststoff, Verbundwerkstoff oder dergleichen ausgebildet sind. Insbesondere sind die Werkstücke als plattenförmige Werkstücke ausgebildet, beispielsweise als Massivholz- oder Spanplatten, Leichtbauplatten, Sandwichplatten oder dergleichen. Es versteht sich, dass die Bearbeitungsmaschine jedoch nicht auf das Bearbeiten derartiger Werkstücke und/oder Werkstoffe beschränkt ist.

Die Kupplungsvorrichtung 10 umfasst ein antriebsseitiges Kupplungselement 14 und ein abtriebsseitiges Kupplungselement 15, die lösbar miteinander koppelbar sind. Das antriebsseitige Kupplungselement 14 und das abtriebsseitige Kupplungselement 15 weisen jeweils einen Grundkörper 16, 17 auf, der eine im Wesentlichen zylindrische Form aufweist. Vorzugsweise weisen die Grundkörper 16, 17 eine rotationssymmetrische Geometrie auf. In der gekoppelten Konfiguration 12 sind die Kupplungselemente 14, 15 in einer axialen Richtung zueinander ausgerichtet und bilden eine gemeinsame axiale Drehachse 18.

Das antriebsseitige Kupplungselement 14 ist über einen Anschluss 19 mit der Bearbeitungsmaschine koppelbar. Die Bearbeitungsmaschine kann hierzu wenigstens eine zu dem Anschluss 19 des antriebsseitigen Kupplungselements 14 korrespondierende Schnittstelle aufweisen. Insbesondere ist das antriebsseitige Kupplungselement 14 über den Anschluss 19 durch eine drehmomentschlüssige Verbindung mit der Bearbeitungsmaschine koppelbar, sodass ein Antriebsmoment der Bearbeitungsmaschine auf das antriebsseitige Kupplungselement 14 übertragbar ist. Alternativ kann ebenso vorgesehen sein, dass das antriebsseitige Kupplungselement 14 als eine Komponente der Bearbeitungsmaschine ausgebildet ist.

Das abtriebsseitige Kupplungselement 15 ist als eine Werkzeugaufnahme zum Aufnehmen des Bearbeitungswerkzeugs 11 ausgebildet. Das abtriebsseitige Kupplungselement 15 umfasst einen Aufnahmeabschnitt 20, in dem das Bearbeitungswerkzeug 11 aufgenommen ist. Das Bearbeitungswerkzeug 11 ist mit einem Schaftende in den Aufnahmeabschnitt 20 eingesetzt. Der Aufnahmeabschnitt 20 kann eine Fixierung 21 aufweisen, beispielsweise einen Schnellverschluss, um das Bearbeitungswerkzeug 11 in dem Aufnahmeabschnitt 20 zu fixieren.

Die Kupplungsvorrichtung 10 umfasst eine in Fig. 2 ersichtliche Ausrichteinrichtung 22, durch welche das antriebsseitige Kupplungselement 14 und das abtriebsseitige Kupplungselement 15 zueinander ausgerichtet werden können, um diese miteinander zu koppeln.

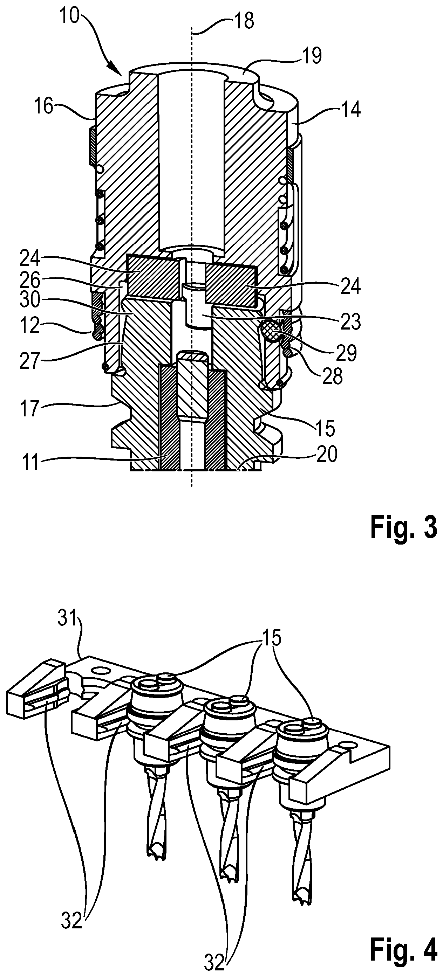

Die Ausrichteinrichtung 22 umfasst in der dargestellten Ausführungsform der Kupplungsvorrichtung 10 zwei abtriebsseitige Magnetelemente 23 und zwei korrespondierende antriebsseitige Magnetelemente 24 (in Fig. 3 ersichtlich). Es versteht sich, dass die Ausrichteinrichtung 22 alternativ auch nur ein abtriebsseitiges Magnetelement 23 und ein antriebsseitiges Magnetelement 24 aufweisen kann oder auch mehr als zwei abtriebsseitige Magnetelemente 23 und mehr als zwei antriebsseitige Magnetelemente 24.

Die Magnetelemente 23, 24 sind jeweils an einer Stirnseite 25 bzw. in einer stirnseitigen Ausnehmung 26 der Kupplungselemente 14, 15 angeordnet. Dabei können die Magnetelemente 23, 24 eine beliebige geometrische Ausgestaltung aufweisen, beispielhaft sind die Magnetelemente 23, 24 in der dargestellten Ausführungsform als zylindrische Magnetelemente 23, 24 ausgebildet. Bevorzugt ragen die Magnetelemente 23, 24 gegenüber der Stirnseite 25 bzw. einer Bodenfläche der stirnseitigen Ausnehmung 26 der Kupplungselemente 14, 15 hervor. Die Magnetelemente 23, 24 sind bevorzugt als Permanentmagnete ausgebildet (z.B. Noedymmagnete). Alternativ können die Magnetelemente 23, 24 auch als elektromagnetische Aktoren ausgebildet sein (z.B. Elektromagnete).

Durch die Magnetelemente 23, 24 wird jeweils ein Kraftfeld, d.h. ein magnetisches Feld, ausgebildet, welches eine Ausrichtbewegung A von zumindest einem der Kupplungselemente 14, 15 bewirkt. Dabei kann entweder vorgesehen sein, dass die durch die Magnetelemente 23, 24 erzeugten Kraftfelder eine Ausrichtbewegung A des antriebsseitigen Kupplungselements 14 oder des abtriebsseitigen Kupplungselements 15 bewirken, oder, dass die durch die Magnetelemente 23, 24 erzeugten Kraftfelder eine Ausrichtbewegung A des antriebsseitigen Kupplungselements 14 und des abtriebsseitigen Kupplungselements 15 bewirken.

Insbesondere werden durch die Magnetelemente 23, 24 sich jeweils abstoßende Kraftfelder ausgebildet. Das heißt, zwischen jedem Magnetelement 23, 24 ist eine Abstoßungskraft gebildet, so dass sich die Magnetelemente 23, 24 gegenseitig abstoßen. Aufgrund dieser sich einander abstoßenden Kraftfelder bewegen sich die abtriebsseitigen Magnetelemente 23 und die antriebsseitigen Magnetelemente 24 bei einem Annähern der Kupplungselemente 14, 15 voneinander weg, wodurch eine rotatorische Ausrichtbewegung A des antriebsseitigen Kupplungselements 14 und/oder des abtriebsseitigen Kupplungselements 15 bewirkt wird. Folglich werden die Kupplungselemente 14, 15 durch diese rotatorische Ausrichtbewegung A in einer definierten Ausrichtposition zueinander ausgerichtet, in der die abtriebsseitigen Magnetelemente 23 und die antriebsseitigen Magnetelemente 24 in einer axialen Richtung gesehen versetzt zueinander angeordnet sind.

Sind die Kupplungselemente 14, 15 aufgrund eines gegenseitigen Annäherns durch die Ausrichteinrichtung 22 in der definierten Orientierung zueinander ausgerichtet, d.h. in der in Fig. 2 dargestellten definierten Ausrichtposition, können die Kupplungselemente 14, 15 durch eine aufeinander zu gerichtete Kopplungsbewegung K miteinander gekoppelt werden, um in die gekoppelte Konfiguration 12 überführt zu werden.

Fig. 3 zeigt eine perspektivische Schnittansicht der Kupplungsvorrichtung 10 in der gekoppelten Konfiguration 12.

In der gekoppelten Konfiguration 12 ist das abtriebsseitige Kupplungselement 15 mit einem konischen Abschnitt 27 in die stirnseitige Ausnehmung 26 des antriebsseitigen Kupplungselements 14 eingesetzt. Die Kupplungsvorrichtung 10 weist eine Verriegelungseinrichtung 28 auf, durch welche die Kupplungselemente 14, 15 in der gekoppelten Konfiguration 12 lösbar axial fixiert werden können.

Die Verrieglungseinrichtung 28 umfasst ein radial federnd gelagertes Kugelelement 29, das an einem Innenumfang des antriebsseitigen Kupplungselements 14 vorgesehen ist, und eine an einem Außenumfang des abtriebsseitigen Kupplungselements 15, insbesondere des konischen Abschnitts 27 des abtriebsseitigen Kupplungselements 15, ausgebildete Vertiefung 30. Die Vertiefung 30 ist insbesondere als eine entlang des Außenumfangs des abtriebsseitigen Kupplungselements 15 verlaufende Nut ausgebildet. In der gekoppelten Konfiguration 12 der Kupplungselemente 14, 15 greift das Kugelelement 29 in die Vertiefung 30 ein, wodurch die lösbare axiale Fixierung der Kupplungselemente 14, 15 ausgebildet ist.

Es versteht sich, dass die Verrieglungseinrichtung 28 ebenso in der Weise ausgebildet sein kann, dass das Kugelelement 29 am Außenumfang des abtriebsseitigen Kupplungselements 15 vorgesehen ist und die Vertiefung 30 am Innenumfang des antriebsseitigen Kupplungselements 14 ausgebildet ist.

In der gekoppelten Konfiguration der Kupplungselemente 14, 15 ist eine drehmomentschlüssige Verbindung zwischen dem antriebsseitigen Kupplungselement 14 und dem abtriebsseitigen Kupplungselement 15 gebildet. Diese drehmomentschlüssige Verbindung ist insbesondere durch eine formschlüssige Verbindung ausgebildet, indem in der gekoppelten Konfiguration 12 zwischen dem antriebsseitigen Magnetelement 24 und dem abtriebsseitigen Magnetelement 23 eine formschlüssige Wirkverbindung ausgebildet ist.

Wie in der Schnittansicht gemäß Fig. 3 verdeutlicht, ist diese formschlüssige Verbindung durch eine entsprechende Ausgestaltung der Magnetelemente 23, 24 gebildet, bei welcher die in einer axialen Richtung gesehen versetzt zueinander ausgerichteten antriebsseitigen Magnetelemente 24 und abtriebsseitigen Magnetelemente 23 in der gekoppelten Konfiguration der Kupplungselemente 14, 15 in einer radialen Richtung aneinander anliegen bzw. aneinander angreifen, d.h. mit den Zylinderflächen der Magnetelemente aneinander anliegen bzw. aneinander angreifen.

Dadurch sind die antriebsseitigen Magnetelemente 24 und die abtriebsseitigen Magnetelemente 23 in der gekoppelten Konfiguration 12 jeweils abwechselnd nebeneinanderliegend angeordnet und liegen in der radialen Richtung der Kupplungselemente 14, 15 aneinander an. Mit anderen Worten, in der gekoppelten Konfiguration 12 der Kupplungselemente 14, 15 ist durch die antriebsseitigen Magnetelemente 24 und die abtriebsseitigen Magnetelemente 23 eine Verzahnung gebildet, durch welche die formschlüssige Verbindung zwischen den Kupplungselementen 14, 15 ausbildet ist. Durch diese formschlüssige Verbindung können über die Kupplungsvorrichtung 10 hohe Drehmomente von der Bearbeitungsmaschine auf das Bearbeitungswerkzeug 11 übertragen werden.

Alternativ kann ebenso vorgesehen sein, dass die Magnetelemente 23, 24 durch das Koppeln der Kupplungselemente 14, 15 ineinander eingreifen oder in vorgesehene Vertiefungen eingreifen, um die formschlüssige Verbindung zwischen den Kupplungselementen 14, 15 auszubilden.

Die zuvor beschriebene Ausführungsform der Kupplungsvorrichtung 10 sieht vor, dass das Ausrichten der Kupplungselemente 14, 15 durch Kraftfelder der Magnetelemente 23, 24 bewirkt ist, die gegenseitige Abstoßungskräfte bilden. Es versteht sich, dass die Kupplungsvorrichtung 10 alternativ ebenso ausgestaltet sein kann, indem die Magnetelemente 23, 24 Kraftfelder bilden die sich durch Anziehungskräfte anziehen, sodass durch diese Anziehungskräfte das Ausrichten und/oder formschlüssige Koppeln der Kupplungselemente 14, 15 vorgesehen ist.

Fig. 4 zeigt eine perspektivische Ansicht einer kammartigen Haltevorrichtung 31 zum Aufnehmen und Halten mehrerer abtriebsseitiger Kupplungselemente 15. Gemäß Fig. 4 ist die Haltevorrichtung 31 für vier abtriebsseitige Kupplungselemente 15 ausgebildet, die Haltevorrichtung 31 kann jedoch ebenso ausgebildet sein weniger als vier oder mehr als vier abtriebsseitige Kupplungselemente 15 aufzunehmen.

Die Haltevorrichtung 31 ist insbesondere ausgebildet, ein gleichzeitiges Ausrichten und Koppeln der mehreren abtriebsseitigen Kupplungselemente 15 mit einer entsprechenden Anzahl korrespondierender antriebsseitiger Kupplungselemente 14 zu ermöglichen.

Hierzu kann die Haltevorrichtung 31 an einer nicht näher dargestellten Stelleinrichtung angeordnet sein, durch die eine Stellbewegung der Haltevorrichtung 31 mit den daran vorgesehenen abtriebsseitigen Kupplungselementen 15 in einer X-, Y- und/oder Z-Richtung steuerbar ist. Durch diese Stellbewegung kann die Halteeinrichtung 31 zu der Bearbeitungsmaschine verfahrbar sein, um die abtriebsseitigen Kupplungselemente 15 mit den korrespondierenden antriebsseitigen Kupplungselementen 14, die beispielsweise an der Bearbeitungsmaschine vorgesehen sind, zu koppeln. Die Stelleinrichtung kann mit einer Steuerungseinrichtung gekoppelt sein, durch welche das Koppeln der Kupplungselemente 14, 15 steuerbar ist.

Hierzu sind die abtriebsseitigen Kupplungselemente 15 um deren jeweilige Drehachse 18 frei rotierbar in der jeweiligen Aufnahme 32 gehalten, sodass beim Annähern der abtriebsseitigen und antriebsseitigen Kupplungselemente 14, 15 aneinander, durch die entsprechenden Kraftfelder der jeweiligen Kupplungsvorrichtungen 10 gleichzeitig die rotatorische Ausrichtbewegung A der abtriebsseitigen Kupplungselemente 15 bewirkt wird. Auf diese Weise kann durch die Kupplungsvorrichtung 10 ein gleichzeitiges und/oder automatisierbares Ausrichten und Koppeln einer Vielzahl Bearbeitungswerkzeuge 11 mit der Bearbeitungsmaschine ausgebildet sein.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Kupplungsvorrichtung (10) für ein Bearbeitungswerkzeug (11), insbesondere zum Koppeln eines Bearbeitungswerkzeugs (11) mit einer Bearbeitungsmaschine, umfassend ein antriebsseitiges Kupplungselement (14) und ein abtriebsseitiges Kupplungselement (15), die lösbar miteinander koppelbar sind, und eine Ausrichteinrichtung (22), die wenigstens ein Kraftfeld zum Ausrichten des antriebsseitigen Kupplungselements (14) und/oder des abtriebsseitigen Kupplungselements (15) bildet.

2. Kupplungsvorrichtung nach Anspruch 1, bei der ferner das wenigstens eine Kraftfeld eine rotatorische und/oder translatorische Ausrichtbewegung (A) des antriebsseitigen Kupplungselements (14) und/oder des abtriebsseitigen Kupplungselements (15) bewirkt.

3. Kupplungsvorrichtung nach Anspruch 1 oder 2, bei der ferner die Kupplungselemente (14, 15) durch die durch das Kraftfeld bewirkte Ausrichtbewegung (A) des antriebsseitigen Kupplungselements (14) und/oder des abtriebsseitigen Kupplungselements (15) in einer definierten Orientierung zueinander ausrichtbar sind.

4. Kupplungsvorrichtung nach einem der vorhergehenden Ansprüche, bei der ferner in einer gekoppelten Konfiguration (12) der Kupplungselemente (14, 15) eine drehmomentschlüssige Verbindung zwischen dem antriebsseitigen Kupplungselement (14) und dem abtriebsseitigen Kupplungselement (15) ausgebildet ist.

5. Kupplungsvorrichtung nach einem der vorhergehenden Ansprüche, bei der ferner die Ausrichteinrichtung (22) wenigstens ein antriebsseitiges Magnetelement (24) und wenigstens ein abtriebsseitiges Magnetelement (23) aufweist, wobei die Magnetelemente (23, 24) sich anziehende oder sich abstoßende Kraftfelder bilden, welche die Ausrichtbewegung (A) des antriebsseitigen Kupplungselements (14) und/oder des abtriebsseitigen Kupplungselements (15) bewirken.

6. Kupplungsvorrichtung nach Anspruch **5,** bei der ferner in der gekoppelten Konfiguration (12) der Kupplungselemente (14, 15) durch das wenigstens eine antriebsseitige Magnetelement (24) und/oder das wenigstens eine abtriebsseitige Magnetelement (23) eine Wirkverbindung zwischen den Kupplungselementen (14, 15) ausgebildet ist, welche die drehmomentschlüssige Verbindung bildet.

7. Kupplungsvorrichtung nach Anspruch 5 oder 6, bei der ferner in der gekoppelten Konfiguration (12) der Kupplungselemente (14, 15) das wenigstens eine antriebsseitige Magnetelement (24) und das wenigstens eine abtriebsseitige Magnetelement (23) aneinander anliegen, aneinander angreifen und/oder ineinander eingreifen, um die drehmomentschlüssige Verbindung auszubilden.

8. Kupplungsvorrichtung nach einem der Ansprüche 4 bis 7, bei der ferner zumindest ein Koppelelement vorgesehen ist, durch das in der gekoppelten Konfiguration (12) der Kupplungselemente (14, 15) eine Wirkverbindung zwischen den Kupplungselementen (14, 15) ausgebildet ist, welche die drehmomentschlüssige Verbindung bildet.

9. Kupplungsvorrichtung nach einem der vorhergehenden Ansprüche, bei der ferner eine Verriegelungseinrichtung (28) vorgesehen ist, die in der gekoppelten Konfiguration (12) die Kupplungselemente (14, 15) lösbar fixiert, bevorzugt lösbar axial fixiert.

10. Kupplungsvorrichtung nach einem der vorhergehenden Ansprüche, bei der ferner das abtriebsseitige Kupplungselement (15) eine Werkzeugaufnahme zum Aufnehmen des Bearbeitungswerkzeugs (11) umfasst oder eine Komponente des Bearbeitungswerkzeugs (11) bildet und/oder das antriebsseitige Kupplungselement (14) mit einer Bearbeitungsmaschine koppelbar ist oder eine Komponente der Bearbeitungsmaschine bildet.

11. Bearbeitungsmaschine zur Bearbeitung von Werkstücken, die bevorzugt aus Holz, Holzwerkstoffen, Kunststoff, Verbundwerkstoff und/oder dergleichen ausgebildet sind, umfassend wenigstens eine Schnittstelle zum Koppeln eines Bearbeitungswerkzeugs (11), wobei die Schnittstelle zumindest eine Kupplungsvorrichtung (10) nach einem der Ansprüche 1 bis 10 aufweist.

12. Verfahren zum Koppeln wenigstens eines Bearbeitungswerkzeugs (11) mit einer Bearbeitungsmaschine, insbesondere mit einer Kupplungsvorrichtung (10) nach einem der Ansprüche 1 bis 10, aufweisend die Schritte:
- Bereitstellen wenigstens eines antriebsseitigen Kupplungselements (14) und wenigstens eines abtriebsseitigen Kupplungselements (15), die lösbar miteinander koppelbar sind,
- Bilden wenigstens eines Kraftfeldes zum Ausrichten des antriebsseitigen Kupplungselements (14) und/oder des abtriebsseitigen Kupplungselements (15),
- Ausrichten des antriebsseitigen Kupplungselements (14) und/oder des abtriebsseitigen Kupplungselements (15) durch eine rotatorische und/oder translatorische Ausrichtbewegung (A), indem das wenigstens eine Kraftfeld auf das antriebsseitige Kupplungselement (14) und/oder das abtriebsseitige Kupplungselement (15) wirkt, und
- Koppeln der zueinander ausgerichteten Kupplungselemente (14, 15).

13. Verfahren nach Anspruch 12, bei dem ferner mehrere antriebsseitige Kupplungselemente (14) und mehrere abtriebsseitige Kupplungselemente (15), die jeweils miteinander koppelbar sind, bereitgestellt werden, und die mehreren antriebsseitigen Kupplungselemente (14) und/oder die mehreren abtriebsseitigen Kupplungselemente (15) vor dem Koppeln gemeinsam durch das wenigstens eine Kraftfeld ausgerichtet werden.
